(19) Europäisches Patentamt / European Patent Office / Office européen des brevets

(11) **EP 3 065 477 B1**

(12) **EUROPEAN PATENT SPECIFICATION**

(45) Date of publication and mention
of the grant of the patent:
**23.05.2018 Bulletin 2018/21**

(51) Int Cl.:
***H04W 68/04*** *(2009.01)*

(21) Application number: **16150777.7**

(22) Date of filing: **11.01.2016**

(54) **PAGING METHOD AND PAGING DEVICE**

PAGINGVERFAHREN UND PAGINGVORRICHTUNG

PROCÉDÉ ET DISPOSITIF DE RADIOMESSAGERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2015 CN 201510084736**

(43) Date of publication of application:
**07.09.2016 Bulletin 2016/36**

(73) Proprietor: **Sercomm Corporation
Taipei 115 (TW)**

(72) Inventor: **Cao, Ruo-Yu
215021 Suzhou (CN)**

(74) Representative: **Krauns, Christian
Wallinger Ricker Schlotter Tostmann
Patent- und Rechtsanwälte Partnerschaft mbB
Zweibrückenstraße 5-7
80331 München (DE)**

(56) References cited:
**US-A1- 2013 316 706     US-A1- 2014 155 109**

**Description**

FIELD OF THE INVENTION

The present invention relates to a paging method, and more particularly, to a paging method based on a physical neighbor list and an activity neighbor list.

BACKGROUND OF THE INVENTION

Wireless communication technology has been widely used in people's daily life, including the 3rd generation (3G) of mobile telecommunications technology and Long Term Evolution (LTE). It has become more and more important to deploy small cells in the 3G and LTE environment. Small cells include for example microcells, picocells, and femtocells; they enhance the coverage of a wireless network. For example, a femtocell may be installed indoors or at a place where wireless network signal could not easily reach to make a user equipment (UE) connected to the network via the femtocell.

When the core network (CN) or the evolved packet core (EPC) needs to page a UE, the CN or EPC sends a paging message to small cells such that the small cells attempt to page the UE. Thus there is a need for an accurate and efficient paging method in a wireless network environment with many small cells deployed.

The US patent application US 2014/155109 A1 discloses systems and methods for paging devices in a communication network. A network device providing mobility management through control messaging is assigned to a number of cell sites in multiple tracking areas. The network device such as a mobility management entity uses a subscriber-aware implementation to provide a hierarchy for contacting a mobile device with a page. The subscriber-aware implementation analyzes subscriber activity such as frequency and timing, to page a subset of the total number of cell sites in multiple tracking areas based on the subscriber activity, and to expand the subset after unsuccessful attempts to page the mobile device.

The US patent application US 2013/316706 A1 discloses a method and an apparatus for efficient paging of user equipment in an LTE network. In addition to storing the Last Seen eNodeB for each user equipment attached to a mobility management entity, the mobility management entity also maintains an Last Seen eNodeB List of the eNodeBs seen immediately before the Last Seen eNodeB for each user equipment. When a notification for an user equipment arrives at the mobility management entity, then the mobility management entity can select from several paging methods, including paging only the Last Seen eNodeB to locate the user equipment and sending a paging request Last Seen eNodeB as well as to the list of eNodeBs seem immediately before the Last Seen eNodeB. The mobility management entity can send a paging request to more than a single eNodeB but less than a full tracking Area.

SUMMARY OF THE INVENTION

The disclosure is directed to a paging method and a paging device. One of the advantages of the paging method is to reduce the number of small cells required for paging and to enhance the possibility of a successful paging.

According to one embodiment, a paging method for paging a UE through multiple small cells is provided. The paging method includes: identifying a first small cell where the UE is currently registered, obtaining a physical neighbor list according to the first small cell, obtaining an activity neighbor list according to the first small cell, and paging the UE according to the physical neighbor list and the activity neighbor list. The physical neighbor list includes part of the small cells which are spatially neighboring the first small cell. The activity neighbor list includes part of the small cells which have UE activity trajectories connected to the first small cell. The method comprises further paging the UE according to the physical neighbor list and the activity neighbor list, wherein the step of paging the UE according to the physical neighbor list and the activity neighbor list comprises: setting a threshold value according to a paging count for the UE, determining a paging cell list according to the threshold value; and paging the UE according to the paging cell list. The activity neighbor list further comprises an activity value corresponding to each small cell, wherein the activity value represents a respective UE activity frequency from the first small cell to each small cell, and the step of determining the paging cell list comprises selecting part of the plurality of small cells in descending order of the activity value to be a plurality of candidate activity neighbor cells, wherein a ratio of a first sum to a second sum is greater than or equal to the threshold value, the first sum being a sum of the activity values corresponding to the plurality of candidate activity neighbor cells, the second sum being a sum of the activity values corresponding to all small cells in the activity neighbor list.

According to another embodiment, a paging device for paging a UE through multiple small cells is provided. The paging device includes a transceiver, a memory unit, and a processing unit. The transceiver is configured to identify a first small cell where the UE is currently registered and page the UE according to a paging cell list. The memory unit is configured to store multiple neighbor relationship lists. The processing unit is configured to obtain a physical neighbor list and an activity neighbor list corresponding to the first small cell from the neighbor relationship lists, and determine the paging cell list according to the physical neighbor list and the activity neighbor list. The physical neighbor list includes part of the small cells which are spatially neighboring the first small cell, and the activity neighbor list includes part of the small cells which have UE activity trajectories connected to the first small cell. The processing unit is configured to set a threshold value according to a paging count for the UE, and to determine the paging cell list according to the threshold value. The activity neighbor list further comprises an activity value corresponding to each small cell, wherein the activity value represents a respective UE activity frequency from the first small cell to each small cell. For the determination of the paging cell list, the processing unit is configured to select part of the plurality of small cells in descending order of the activity value to be a plurality of candidate activity neighbor cells, wherein a ratio of a first sum to a second sum is greater than or equal to the threshold value, the first sum being a sum of the activity values corresponding to the plurality of candidate activity neighbor cells, the second sum being a sum of the activity values corresponding to all small cells in the activity neighbor list.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

BRIEF DESCRIPTION OF THE DRAWINGS

The above objects and advantages of the present invention will become more readily apparent to those ordinarily skilled in the art after reviewing the following detailed description and accompanying drawings, in which:

FIG. 1 shows a diagram of deploying small cells in a wireless network environment.

FIG. 2 shows a flowchart of a paging method according to one embodiment of the invention.

FIG. 3 shows a flowchart of paging the UE according to the physical neighbor list and the activity neighbor list according to one embodiment of the invention.

FIG. 4 shows a flowchart of a neighbor list recording method according to one embodiment of the invention.

FIG. 5 shows a paging device according to one embodiment of the invention.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

DETAILED DESCRIPTION OF PREFERRED EMBODIMENTS

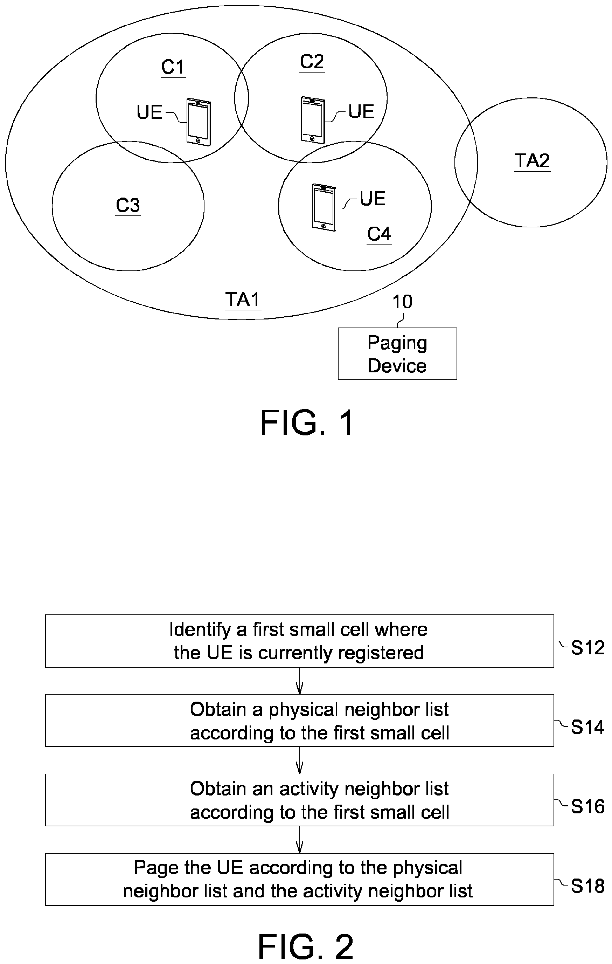

FIG. 1 shows a diagram of deploying small cells in a wireless network environment. Take the LTE system architecture for example, there are a number of tracking areas (TA) in the wireless network environment, shown as the two tracking areas TA1 and TA2 in FIG. 1. When a UE (for example, a mobile phone as shown in FIG. 1) moves from the tracking area TA1 to the tracking area TA2, the UE sends a message to inform the core network, such that the core network is able to track the location of the UE.

There may be several small cells deployed in a tracking area to enhance the network coverage. The small cells, such as microcell, picocell, or femtocell, may be deployed at home, office, or other suitable places. As shown in FIG. 1, there are four small cells C1-C4 deployed in the tracking area TA1. The UE may move between different small cells in the tracking area TA1. When a paging device 10 in the core network needs to page the UE, because the core network only knows that the UE is in the tracking area TA1, the core network sends paging messages to all of the small cells C1-C4 in the tracking area TA1. The paging device 10 is for example a Mobility Management Entity (MME).

As the demand for better network coverage and the increasing number of network users, the deployment of small cells becomes denser and the number of small cells increases accordingly. The geographical region of one tracking area may be very large, for example, there may be several thousands of femtocells deployed in a tracking area. If a paging device sends paging messages to all of the small cells in the tracking area, one paging session may involve several thousands of paging messages, resulting in a paging storm problem that has a huge impact on the core network as well as the small cells. Therefore a paging method is provided to reduce the number of small cells required for paging.

FIG. 2 shows a flowchart of a paging method according to one embodiment of the invention. The paging method may be used to page a UE through multiple small cells. The paging method includes the following steps. Step S12: identifying a first small cell C1 where the UE is currently registered. Step S14: obtaining a physical neighbor list NL according to the first small cell C1, wherein the physical neighbor list NL includes part of the small cells which are spatially neighboring the first small cell C1. Step S16: obtaining an activity neighbor list AL according to the first small cell C1, wherein the activity neighbor list AL includes part of the small cells which have UE activity trajectories connected to the first small cell C1. Step S18: paging the UE according to the physical neighbor list NL and the activity neighbor list AL.

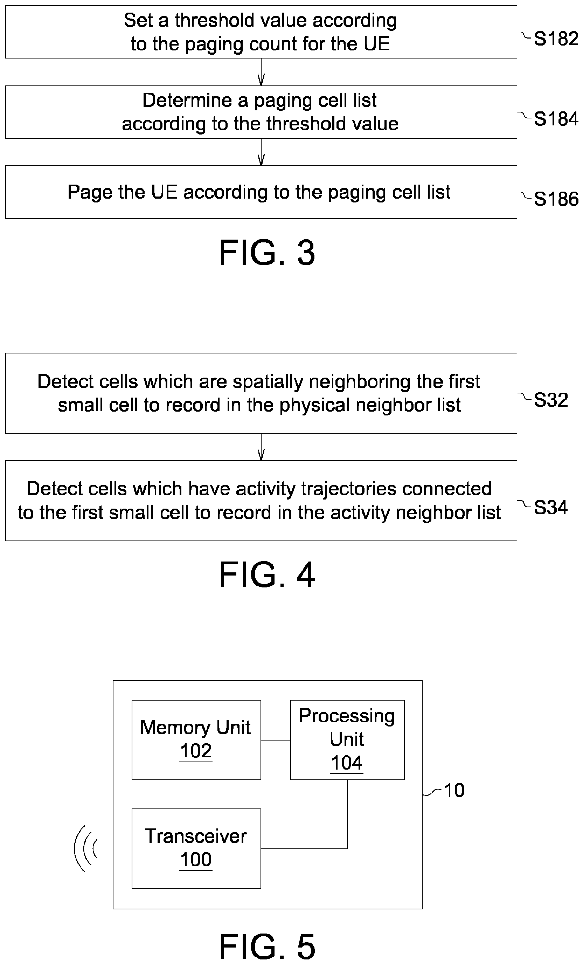

The paging method in this embodiment utilizes the physical neighbor list NL and the activity neighbor list AL. Please refer to FIG. 4 for the method of recording the physical neighbor list NL and the activity neighbor list AL. FIG. 4 shows a flowchart of a neighbor list recording method according to one embodiment of the invention. The recording method may be used to record relationship between the first small cell C1 and multiple small cells. The recording method includes the following steps. Step S32: detecting part of the small cells which are spatially neighboring the first small cell C1 to record in the physical neighbor list NL. Step S34: detecting part of the small cells which have UE activity trajectories connected to the first small cell C1 to record in the activity neighbor list AL.

Referring to the system architecture shown in FIG. 1, the paging device 10 may store the physical neighbor list NL and the activity neighbor list AL corresponding to each small cell. For example, the $i^{th}$ small cell Ci corresponds to the $i^{th}$ physical neighbor list NLi and the $i^{th}$ activity neighbor list ALi. The step S32 may be executed when the small cell is turned on. For example, when the first small cell C1 is turned on, the first small cell C1 detects cells which are spatially neighboring the first small cell C1. In the example shown in FIG. 1, the spatially neighboring cells include small cells C2 and C3. The first small cell C1 may send this message to the paging device 10, so that the paging device 10 may record small cells C2 and C3 in the physical neighbor list NL1 of the first small cell C1. Every time when the first small cell C1 is rebooted, the first small cell C1 may detect its neighboring cells again to send the corresponding message to the paging device 10 to update the physical neighbor list NL1 of the first small cell C1. In addition, the first small cell C1 may also detect its neighboring cells periodically after being turned on and report to the paging device 10 accordingly.

Because the activity trajectories of the UE are not necessarily related to the spatial distance, the activity neighbor list AL1 may provide additional information that may be different from information in the physical neighbor list NL1. For example, different floors of a commercial building may correspond to different companies. Two small cells deployed by two different companies may be spatially close to each other. However, there may be no UE activity trajectories between these two small cells located in different floors. On the contrary, two small cells that are spatially distant away may have a UE activity trajectory in-between. An example is that a company owns two non-adjacent floors in a building, and two small cells located on the two floors may have a UE activity trajectory in-between. Therefore, the paging method in this disclosure takes the activity neighbor list AL into consideration. The activity neighbor list AL1 of the first small cell C1 records the small cells which have UE activity trajectories connected to the first small cell C1.

As shown in FIG. 2, when initiating a paging session, the first small cell C1 where the UE is currently registered is identified (Step S12). The location of the UE may be registered in a device H, such as a Home Subscriber Server (HSS) or a Home Location Register (HLR), depending on the communication architecture. Whenever the UE initiates a session request or during a periodic location update procedure, the device H determines whether the registered location of the UE has been changed. Thus the device H stores the latest registered location of the UE. When performing the step S12, the paging device 10 may identify the latest registered location of the UE, which is the first small cell C1 in this example. The paging device 10 then obtains the physical neighbor list NL1 (step S14) and the activity neighbor list AL1 (step S16) of the first small cell C1. Therefore the paging device 10 knows the cells which are spatially neighboring to the first small cell C1 as well as the cells which have UE activity trajectories connected to the first small cell C1. The paging device 10 is able to page the UE according to the physical neighbor list NL1 and the activity neighbor list AL1 of the first small cell C1 (step S18). The paging method shown in FIG. 2 effectively reduces the number of small cells required for paging as compared to paging every small cell in one tracking area.

Detailed description about the activity neighbor list AL is given below. The activity neighbor list AL1 of the first small cell C1 includes the cells which have UE activity trajectories connected to the first small cell C1. The activity neighbor list AL1 may further include an activity value corresponding to each small cell, wherein the activity value represents a respective UE activity frequency from the first small cell C1 to each small cell. One example of the activity neighbor list AL1 is shown in Table 1 below.

Table 1

| Small cell index | Activity Value |
| --- | --- |
| C578 | 9150 |
| C305 | 6472 |
| C697 | 3441 |
| C101 | 1764 |

As the example shown in Table 1, the first small cell C1 has the highest activity value to the small cell C578, which means the UE activity from the first small cell C1 to the small cell C578 is the most frequent. The first small cell has the second highest activity value to the small cell C305.

The update procedure for the activity neighbor list AL1 that includes the activity value is described as follows. When a registered location of an activity UE changes from the first small cell C1 to a second small cell C2 (the first small cell C1 and the second small cell C2 may belong to the same tracking area TA1), for example, the device H may detect that this activity causes a change of the registered location of the activity UE, the device H may send this message to the paging device 10. The paging device 10 may increase the activity value of the second small cell C2 by a weight value in the activity neighbor list AL1 stored in the paging device 10. The weight value is for example equal to 1. That is, the activity value of the corresponding small cell is incremented by 1 whenever the registered location changes to that small cell. In addition, the weight value may also be determined according to a session initiated by the activity UE. For example, a large weight value may be assigned for a voice communication session, and a small weight value may be assigned for a periodic location update procedure. Alternatively, different weight values may be assigned to different users. By adjusting the weight value appropriately, the probability for successfully predicting the location of the UE can be further improved.

Because the activity value is updated when the registered location of the activity UE changes from the first small cell C1 to the second small cell C2, the information stored in the activity neighbor list AL1 is directional, representing the UE activities started from the first small cell C1. The UE activities started from the second small cell C2 are stored in the activity neighbor list AL2 corresponding to the second small cell C2. By storing directional information of the UE activities in the activity neighbor list AL, the actual UE activities can be recorded more accurately.

In one embodiment, the activity neighbor list AL1 may further include the activity values corresponding to each small cell in different time intervals. For example, the time interval from 7am to 7pm may be divided into morning, noon, and evening. One example of the activity neighbor list AL1 including activity values in different intervals is shown in Table 2 below.

Table 2

| Small cell | Activity value | Morning | Noon | Evening |
|---|---|---|---|---|
| C578 | 9150 | 4043 | 4675 | 432 |
| C305 | 6472 | 2089 | 2158 | 2225 |
| C697 | 3441 | 850 | 1467 | 1124 |
| C101 | 1764 | 570 | 938 | 256 |

As the example shown in Table 2, when recording the activity neighbor list AL1, the detected UE activity is added to the activity value corresponding to the current time interval. When sending paging messages, the activity value in the activity neighbor list AL1 may also be chosen according to the time interval during which the paging session is initiated. Thus the activity characteristics between the small cells can be captured more accurately. For example, there may be high activity values along the commuting routes during morning and evening, and there may be high activity values in dining locations during noon and evening, and so on.

An attenuation strategy may be formulated for the activity values in the activity neighbor list AL. For example, the activity value may be attenuated periodically by subtracting an attenuation value or multiplying an attenuation ratio. The attenuation strategy is to prevent the activity values in the activity neighbor list AL from infinitely increasing. The attenuation may be performed every day or every week for example. The period for attenuation needs not to be a fixed value. Also the attenuation value (or the attenuation ratio) does not have to be a constant value. In one embodiment, the attenuation value (or the attenuation ratio) may be adjusted dynamically according to the length of the period for attenuation.

Detailed description about the step S18: paging the UE according to the physical neighbor list NL and the activity neighbor list AL is given below. FIG. 3 shows a flowchart of paging the UE according to the physical neighbor list and the activity neighbor list according to one embodiment of the invention. The step S18 includes the following steps. Step S182: setting a threshold value Th according to a paging count n for the UE. Step S184: determining a paging cell list PL according to the threshold value Th. Step S186: paging the UE according to the paging cell list PL.

As compared to paging through every small cell in one tracking area, the paging method disclosed herein may be divided into several stages. For example, the paging device 10 may be set to page the UE for three times. Different threshold value Th may be set in every paging attempt. A larger threshold value Th means that more small cells are to be paged through, and thus a higher possibility of a successful paging. In contrast, a smaller threshold value Th means that fewer small cells are to be paged through, and also fewer resources are spent during paging.

The step of determining the paging cell list PL in every paging attempt may include the following step: selecting part of the small cells in descending order of the activity value to be multiple candidate activity neighbor cells such that a ratio of a first sum to a second sum is greater than or equal to the threshold value. The first sum is the sum of the activity values corresponding to the candidate activity neighbor cells. The second sum is the sum of the activity values corresponding to all small cells in the activity neighbor list AL. In other words, the candidate activity neighbor cells may be formed by: starting from the small cell with the highest activity value, adding the small cell to the candidate activity neighbor cells one by one until the sum of the activity values of the candidate activity neighbor cells is greater than or equal to a particular value.

Take the first paging attempt for example (paging count n=1), the objective is to page the UE successfully through a fewer number of small cells. The threshold value Th may be set as 70%. The threshold value Th is roughly proportional to the possibility of a successful paging. Please refer to the Table 1, the sum of the activity values of each small cell equals 20827. Starting from the small cell with the highest activity value, which is the small cell C578, the candidate activity neighbor cells may include the small cells C578 and C305 ( $\dfrac{9150+6472}{20827} \geq 70\%$ ).

The paging cell list PL for the first paging attempt may include the first small cell C1, the physical neighbor list NL1, and the candidate activity neighbor cells (small cells C578 and C305). That is, the paging device 10 attempts to page the UE through the small cell where the UE is registered most recently, all the neighboring cells to the small cell where the UE is registered most recently, and the small cells that the UE probably moves to with 70% possibility. The paging method disclosed herein not only reduces the number of small cells required for paging through but also ensures a certain amount of successful rate.

If the first paging attempt succeeds, that is, if a paging response from the UE is received successfully, the paging operation is complete. If the first paging attempt fails, that is, if the paging response from the UE is not received within a specific time period, a second paging attempt (n=2) is performed. The second paging attempt aims for more small cells and a higher successful rate, therefore the threshold value Th may be increased, such as 90%. Take the activity neighbor list AL1 in Table 1 for example, when the threshold value Th is set as 90%, the candidate activity neighbor cells include the small cells C578, C305, and C697 ( $\dfrac{9150+6472+3441}{20827} \geq 90\%$ ). In implementation the second paging attempt may send paging messages to only the additional small cells as compared to the first paging attempt. In the above example, the paging target of the first paging attempt includes the small cells C578 and C305, the paging target of the second paging attempt is the small cell C697.

If the second paging attempt still fails, the third paging attempt (n=3) may page through all the small cells in the tracking area. By gradually increasing the threshold value Th in each paging attempt, the number of small cells required for paging through in the first paging attempt is effectively reduced while the possibility of paging successfully is maintained at a specific value. The number of small cells to be paged through may be increased gradually when the previous paging attempt fails. The maximum allowed paging count n and the threshold value Th in each paging attempt is not limited to a particular value and may be determined according to the usage environment.

The activity values corresponding to different time intervals, as shown in Table 2, may also be utilized to determine the candidate activity neighbor cells. For example, when paging in the evening, the activity values in the rightmost column of Table 2 may be used. The calculation procedure regarding the threshold value Th and the corresponding candidate activity neighbor cells is similar to the description given above and thus is not repeated here.

According to the paging method and the neighbor list recording method disclosed herein, a physical neighbor list NL recording spatially neighboring small cells and an activity neighbor list AL recording small cells that have activity trajectories can be maintained. The paging process may be performed according to the physical neighbor list NL and the activity neighbor list AL to select the small cells where the UE most probably exists, such that the number of small cells required for paging through is reduced to prevent the paging storm problem in an environment with dense deployment of small cells.

Furthermore, based on the statistics of the activity value, the possibility of paging successfully can be predicted, and also the information regarding which small cells have higher activity values may be obtained in order to select the paging cells effectively. The statistics of the activity values may also include time information, such that a more accurate prediction on the UE activity can be made depending on the current time interval.

A paging device is also provided in this invention. FIG. 5 shows a paging device according to one embodiment of the invention. The paging device 10 includes a transceiver 100, a memory unit 102, and a processing unit 104. The paging device 10 may page a UE through multiple small cells. The transceiver 100 is configured to identify a first small cell C1 where the UE is currently registered and page the UE according to a paging cell list PL. The memory unit 102 is configured to store multiple neighbor relationship lists. The processing unit 104 is configured to obtain a physical neighbor list PL and an activity neighbor list AL corresponding to the first small cell C1 from the neighbor relationship lists, and determine the paging cell list PL according to the physical neighbor list NL and the activity neighbor list AL. The physical neighbor list NL includes part of the small cells which are spatially neighboring the first small cell C1, and the activity neighbor list AL includes part of the small cells which have UE activity trajectories connected to the first small cell C1. The paging device 10 may be a device located in the core network to control paging sessions sent to the UE.

The transceiver 100 may include for example radio frequency (RF) circuits and antennas to transmit and receive wireless signals. As another example, the transceiver 100 may include transmitter and receiver that transmit and receive data through physical connector and cable. The memory unit 102 may be a storage device capable of being read and written data, such as a memory or a hard disk. The memory unit 102 may store the physical neighbor list NL and the activity neighbor list AL corresponding to each small cell.

The processing unit 104 may be a microprocessor, a microcontroller, or a similar circuit capable of performing related controls and operations. In one embodiment, the processing unit 104 may execute the neighbor list recording method shown in FIG. 4. For example, when the transceiver 100 receives from the device H a first message indicating a registered location of an activity UE changes from the first small cell C1 to a second small cell C2, the processing unit 104 is configured to increase the activity value of the second small cell C2 by a weight value in the activity neighbor list AL1 of the first small cell C1, where the weight value is determined according to a session initiated by the activity UE. The processing unit 140 then writes the updated activity neighbor list AL1 to the memory unit 102. When the transceiver 100 receives from the first small cell C1 a second message indicating updating part of the small cells which are spatially neighboring the first small cell C1, the processing unit 104 is configured to update the physical neighbor list NL1 of the first small cell C1, and write the updated physical neighbor list NL1 to the memory unit 102.

In addition, the processing unit 104 may execute the paging method shown in FIG. 2 and FIG. 3. For example, the processing unit 104 is configured to set a threshold value Th according to a paging count n for the UE, and determine the paging cell list PL according to the threshold value Th and the activity value recorded in the activity neighbor list AL1. The neighbor list recording method and the paging method executed by the processing unit 104 have been described in the previous embodiments and thus are not repeated here.

## Claims

1. A paging method, for paging a UE through a plurality of small cells, wherein the method comprises:

    (S12) identifying a first small cell (C1) where the UE is currently registered;
    (S14) obtaining a physical neighbor list according to the first small cell (C1), wherein the physical neighbor list comprises part of the plurality of small cells which are spatially neighboring the first small cell (C1);
    (S16) obtaining an activity neighbor list according to the first small cell (C1), wherein the activity neighbor list comprises part of the plurality of small cells which have UE activity trajectories connected to the first small cell (C1); and
    (S18) paging the UE according to the physical neighbor list and the activity neighbor list;

    wherein
    the step of paging the UE according to the physical neighbor list and the activity neighbor list comprises:

    (S182) setting a threshold value according to a paging count for the UE;
    (S184) determining a paging cell list according to the threshold value; and
    (S186) paging the UE according to the paging cell list,

    wherein the activity neighbor list further comprises an activity value corresponding to each small cell, wherein the activity value represents a respective UE activity frequency from the first small cell (C1) to each small cell, and the step of determining the paging cell list comprises:
    selecting part of the plurality of small cells in descending order of the activity value to be a plurality of candidate activity neighbor cells, wherein a ratio of a first sum to a second sum is greater than or equal to the threshold value, the first sum being a sum of the activity values corresponding to the plurality of candidate activity neighbor cells, the second sum being a sum of the activity values corresponding to all small cells in the activity neighbor list.

2. The paging method according to claim 1, **characterized in that** the paging method further comprises:

    (S32) detecting part of the plurality of small cells which are spatially neighboring the first small cell (C1) to record in the physical neighbor list; and
    (S34) detecting part of the plurality of small cells which have UE activity trajectories connected to the first small cell (C1) to record in the activity neighbor list.

3. The paging method according to claim 1 or 2, **characterized in that** the threshold value increases as the paging count increases, and the paging cell list comprises:

the first small cell (C1);
the physical neighbor list; and
the plurality of candidate activity neighbor cells;
wherein the activity neighbor list further comprises the activity value corresponding to each small cell in different time intervals.

4. The paging method according to anyone of the claims 1 to 3, **characterized in that** the paging method further comprises:

(S32) detecting part of the plurality of small cells which are spatially neighboring the first small cell (C1) to record in the physical neighbor list; and
(S34) detecting part of the plurality of small cells which have UE activity trajectories connected to the first small cell (C1) to record in the activity neighbor list.

5. The paging method according to any one of the claims 1 to 4, **characterized in that** the paging method further comprises:

when a registered location of an activity UE changes from the first small cell (C1) to a second small cell (C2), increasing the activity value of the second small cell (C2) by a weight value in the activity neighbor list, where the weight value is determined according to a session initiated by the activity UE; and
attenuating the activity value of each small cell in the activity neighbor list.

6. The paging method according to claim 2 or 4 or claim 5 in dependence on claim 4, **characterized in that** when the first small cell (C1) is turned on, the step of detecting part of the plurality of small cells which are spatially neighboring the first small cell is executed, and the physical neighbor list is updated.

7. A paging device (10), for paging a UE through a plurality of small cells, wherein the paging device (10) comprises:

a transceiver (100), configured to identify a first small cell (C1) where the UE is currently registered and page the UE according to a paging cell list;
a memory unit (102), configured to store a plurality of neighbor relationship lists; and
a processing unit (104), configured to obtain a physical neighbor list and an activity neighbor list corresponding to the first small cell (C1) from the plurality of neighbor relationship lists, and determine the paging cell list according to the physical neighbor list and the activity neighbor list;
wherein the physical neighbor list comprises part of the plurality of small cells which are spatially neighboring the first small cell, and the activity neighbor list comprises part of the plurality of small cells which have UE activity trajectories connected to the first small cell; wherein the processing unit (104) is configured to set a threshold value according to a paging count for the UE, and to determine the paging cell list according to the threshold value; and
wherein the activity neighbor list further comprises an activity value corresponding to each small cell, wherein the activity value represents a respective UE activity frequency from the first small cell to each small cell, and wherein for the determination of the paging cell list, the processing unit (104) is configured to select part of the plurality of small cells in descending order of the activity value to be a plurality of candidate activity neighbor cells, wherein a ratio of a first sum to a second sum is greater than or equal to the threshold value, the first sum being a sum of the activity values corresponding to the plurality of candidate activity neighbor cells, the second sum being a sum of the activity values corresponding to all small cells in the activity neighbor list.

8. The paging device (10) according to claim 7, **characterized in that** the threshold value increases as the paging count increases, and the paging cell list comprises:

the first small cell;
the physical neighbor list; and
the plurality of candidate activity neighbor cells.

9. The paging device (10) according to claim 7 or 8, **characterized in that** when the transceiver (100) receives a first message indicating a registered location of an activity UE changes from the first small cell (C1) to a second small cell (C2), the processing unit (104) is configured to increase the activity value of the second small cell (C2) by a weight value in the activity neighbor list, where the weight value is determined according to a session initiated by the activity UE,
wherein the activity neighbor list further comprises the activity value corresponding to each small cell in different time intervals, and the processing unit (104) is configured to periodically attenuate the activity value of each small cell in the activity neighbor list.

10. The paging device (10) according to any one of the claims 7 to 9, **characterized in that** when the transceiver (100) receives a second message indicating updating part of the plurality of small cells which are spatially neighboring the first small cell (C1), the processing unit (104) is configured to update the physical neighbor list.

**Patentansprüche**

1. Funkrufverfahren zum Funkrufen einer Nutzereinheit über eine Vielzahl an kleinen Zellen, wobei das Verfahren aufweist:

(S12) ein Identifizieren einer ersten kleinen Zelle (C1), in der die Nutzereinheit gegenwärtig registriert ist,
(S14) ein Erhalten einer Liste an physikalischen Nachbarn gemäß der ersten kleinen Zelle (C1), wobei die Liste der physikalischen Nachbarn einen Teil der Vielzahl der kleinen Zellen umfasst, die zu der ersten kleinen Zelle (C1) räumlich benachbart sind,
(S16) ein Erhalten einer Aktivitätsnachbarliste gemäß der ersten kleinen Zelle (C1), wobei die Aktivitätsnachbarliste einen Teil der Vielzahl der kleinen Zellen umfasst, die Nutzereinheit-Aktivitätstrajektorien aufweisen, die mit der ersten kleinen Zelle (C1) verbunden sind, und
(S18) ein Funkrufen der Nutzereinheit gemäß der Liste der physikalischen Nachbarn und der Aktivitätsnachbarliste,

wobei der Schritt des Funkrufens der Nutzereinheit gemäß der Liste der physikalischen Nachbarn und der Aktivitätsnachbarliste umfasst:

(S182) ein Einstellen eines Schwellenwerts gemäß einer Funkruf-Zählung für die Nutzereinheit,
(S184) ein Bestimmen einer Funkrufzellenliste gemäß dem Schwellenwert, und
(S186) ein Funkrufen der Nutzereinheit gemäß der Funkrufzellenliste,

wobei die Aktivitätsnachbarliste ferner einen Aktivitätswert umfasst, der jeder kleinen Zelle entspricht, wobei der Aktivitätswert eine jeweilige Nutzereinheit-Aktivitätsfrequenz der ersten kleinen Zelle (C1) zu jeder kleinen Zelle darstellt, und der Schritt des Bestimmens der Funkrufzellenliste umfasst:
ein Auswählen eines Teils der Vielzahl der kleinen Zellen in absteigender Reihenfolge des Aktivitätswerts als eine Vielzahl an Kandidaten an Aktivitätsnachbarzellen, wobei ein Verhältnis einer ersten Summe zu einer zweiten Summe größer oder gleich dem Schwellenwert ist, wobei die erste Summe eine Summe der Aktivitätswerte entsprechend der Vielzahl der Kandidaten der Aktivitätsnachbarzellen ist, wobei die zweite Summe eine Summe der Aktivitätswerte ist, die allen kleinen Zellen in der Aktivitätsnachbarliste entsprechen.

2. Funkrufverfahren nach Anspruch 1, **dadurch gekennzeichnet, dass** das Funkrufverfahren weiterhin aufweist:

(S32) ein Erfassen eines Teils der Vielzahl der kleinen Zellen, die zu der ersten kleinen Zelle (C1) räumlich benachbart sind, um sie in der Liste der physikalischen Nachbarn aufzuzeichnen, und
(S34) ein Erfassen eines Teils der Vielzahl der kleinen Zellen, die die Nutzereinheit-Aktivitätstrajektorien aufweisen, die mit der ersten kleinen Zelle (C1) verbunden sind, um sie in der Aktivitätsnachbarliste aufzuzeichnen.

3. Funkrufverfahren nach Anspruch 1 oder 2, **dadurch gekennzeichnet, dass** der Schwellenwert ansteigt, wenn die Funkruf-Zählung zunimmt, und die Funkrufzellenliste umfasst:

die erste kleine Zelle (C1),
die Liste der physikalischen Nachbarn und
die Vielzahl der Kandidaten der Aktivitätsnachbarzellen,

wobei die Aktivitätsnachbarliste ferner den Aktivitätswert umfasst, der jeder kleinen Zelle in unterschiedlichen Zeitintervallen entspricht.

4. Funkrufverfahren nach einem der Ansprüche 1 bis 3, **dadurch gekennzeichnet, dass** das Funkrufverfahren weiterhin umfasst:

(S32) ein Erfassen eines Teils der Vielzahl der kleinen Zellen, die zu der ersten kleinen Zelle (C1) räumlich benachbart sind, um sie in der Liste physikalischer Nachbarn aufzuzeichnen, und
(S34) ein Erfassen eines Teils der Vielzahl der kleinen Zellen, die die Nutzereinheit-Aktivitätstrajektorien aufweisen, die mit der ersten kleinen Zelle (C1) verbunden sind, um sie in der Aktivitätsnachbarliste aufzuzeichnen.

5. Funkrufverfahren nach einem der Ansprüche 1 bis 4, **dadurch gekennzeichnet, dass** das Funkrufverfahren weiterhin umfasst:

wenn sich ein registrierter Ort einer Aktivität der Nutzereinheit von der ersten kleinen Zelle (C1) zu einer zweiten kleinen Zelle (C2) ändert, ein Erhöhen des Aktivitätswerts der zweiten kleinen Zelle (C2) um einen Gewichtungswert in der Aktivitätsnachbarliste, wobei der Gewichtungswert gemäß einer Sitzung bestimmt wird, die durch die Aktivität der Nutzereinheit initiiert worden ist, und
ein Abschwächen des Aktivitätswerts jeder kleinen Zelle in der Aktivitätsnachbarliste.

6. Funkrufverfahren nach Anspruch 2 oder 4 oder Anspruch 5 in Abhängigkeit von Anspruch 4, **dadurch gekennzeichnet, dass** beim Einschalten der ersten kleinen Zelle (C1) der Schritt des Erfassens eines Teils der Vielzahl der kleinen Zellen, die räumlich benachbart zu der ersten kleinen Zelle sind, ausgeführt wird, und die Liste physischer Nachbarn aktualisiert wird.

7. Funkrufgerät (10) zum Funkrufen einer Nutzereinheit durch eine Vielzahl von kleinen Zellen, wobei das Funkrufgerät (10) aufweist:

einen Empfänger (100), der ausgestaltet ist, um eine erste kleine Zelle (C1), in der die Nutzereinheit gegenwärtig registriert ist, zu identifizieren und die Nutzereinheit gemäß einer Funkrufzellenliste funkzurufen,
eine Speichereinheit (102), die ausgestaltet ist, um eine Vielzahl von Nachbarschaftsbeziehungslisten zu speichern, und
eine Verarbeitungseinheit (104), die ausgestaltet ist, um eine Liste physikalischer Nachbarn und eine Aktivitätsnachbarliste entsprechend der ersten kleinen Zelle (C1) aus der Vielzahl der Nachbarschaftsbeziehungslisten zu erhalten, und die Funkrufzellenliste gemäß der Liste der physikalischen Nachbarn und der Aktivitätsnachbarliste zu bestimmen,
wobei die Liste der physikalischen Nachbarn einen Teil der Vielzahl der kleinen Zellen umfasst, die zu der ersten kleinen Zelle räumlich benachbart sind, und die Aktivitätsnachbarliste einen Teil der Vielzahl der kleinen Zellen umfasst, die Nutzereinheit-Aktivitätstrajektorien aufweisen, die mit der ersten kleinen Zelle verbunden sind,
wobei die Verarbeitungseinheit (104) ausgestaltet ist, einen Schwellenwert gemäß einer Funkrufzellenliste für die Nutzereinheit einzustellen und die Funkrufzellenliste gemäß dem Schwellenwert zu bestimmen, und
wobei die Aktivitätsnachbarliste ferner einen Aktivitätswert aufweist, der jeder kleinen Zelle entspricht, wobei der Aktivitätswert eine jeweilige Nutzereinheit-Aktivitätsfrequenz von der ersten kleinen Zelle zu jeder kleinen Zelle darstellt, und
wobei für die Bestimmung der Funkrufzellenliste die Verarbeitungseinheit (104) ausgestaltet ist, einen Teil der Vielzahl der kleinen Zellen in absteigender Reihenfolge des Aktivitätswerts als eine Vielzahl an Kandidaten der Aktivitätsnachbarzellen auszuwählen, wobei ein Verhältnis einer ersten Summe zu einer zweiten Summe größer oder gleich dem Schwellenwert ist, wobei die erste Summe eine Summe der Aktivitätswerte ist, die der Vielzahl der Kandidaten der Aktivitätsnachbarzellen entsprechen, wobei die zweite Summe eine Summe der Aktivitätswerte ist, die allen kleinen Zellen in der Aktivitätsnachbarliste entsprechen.

8. Funkrufgerät (10) nach Anspruch 7, **dadurch gekennzeichnet, dass** der Schwellenwert mit steigender Funkrufzahl ansteigt und die Funkrufzellenliste umfasst:

die erste kleine Zelle,
die Liste der physikalischen Nachbarn und
die Vielzahl an Kandidaten der Aktivitätsnachbarzellen.

**9.** Funkrufgerät (10) nach Anspruch 7 oder 8, **dadurch gekennzeichnet, dass** wenn der Empfänger (100) eine erste Nachricht empfängt, die anzeigt, dass ein registrierter Ort einer Aktivität der Nutzereinheit von der ersten kleinen Zelle (C1) zu einer zweiten kleinen Zelle (C2) wechselt, die Verarbeitungseinheit (104) ausgestaltet ist, den Aktivitätswert der zweiten kleinen Zelle (C2) um einen Gewichtungswert in der Aktivitätsnachbarliste zu erhöhen, wobei der Gewichtungswert gemäß einer Sitzung bestimmt wird, die von der Aktivität der Nutzereinheit initiiert worden ist, wobei die Aktivitätsnachbarliste ferner den Aktivitätswert umfasst, der jeder kleinen Zelle in unterschiedlichen Zeitintervallen entspricht, und die Verarbeitungseinheit (104) so ausgestaltet ist, dass sie den Aktivitätswert jeder kleinen Zelle in der Aktivitätsnachbarliste periodisch dämpft.

**10.** Funkrufgerät (10) nach einem der Ansprüche 7 bis 9, **dadurch gekennzeichnet, dass**, wenn der Empfänger (100) eine zweite Nachricht empfängt, die einen Aktualisierungsteil der Vielzahl der kleinen Zellen anzeigt, die zu der ersten kleinen Zelle räumlich benachbart sind (C1), die Verarbeitungseinheit (104) ausgestaltet ist, die Liste der physikalischen Nachbarn zu aktualisieren.

## Revendications

**1.** Procédé de téléavertissement, pour téléavertir un UE par l'intermédiaire d'une pluralité de petites cellules, dans lequel le procédé comprend :

(S12) l'identification d'une première petite cellule (C1) où l'UE est actuellement enregistré ;
(S14) l'obtention d'une liste de voisins physiques selon la première petite cellule (C1), dans lequel la liste de voisins physiques comprend une partie de la pluralité de petites cellules qui sont voisines spatialement de la première petite cellule (C1) ;
(S16) l'obtention d'une liste de voisins d'activité selon la première petite cellule (C1), dans lequel la liste de voisins d'activité comprend une partie de la pluralité de petites cellules qui ont des trajectoires d'activité d'UE connectées à la première petite cellule (C1) ; et
(S18) le téléavertissement de l'UE selon la liste de voisins physiques et la liste de voisins d'activité ;

dans lequel l'étape de téléavertissement de l'UE selon la liste de voisins physiques et la liste de voisins d'activité comprend :

(S182) l'établissement d'une valeur seuil selon un comptage de téléavertissement pour l'UE ;
(S184) la détermination d'une liste de cellules de téléavertissement selon la valeur seuil ; et
(S186) le téléavertissement de l'UE selon la liste de cellules de téléavertissement,

dans lequel la liste de voisins d'activité comprend en outre une valeur d'activité correspondant à chaque petite cellule, dans lequel la valeur d'activité représente une fréquence d'activité d'UE respective de la première petite cellule (C1) à chaque petite cellule, et l'étape de détermination de la liste de cellules de téléavertissement comprend : la sélection d'une partie de la pluralité de petites cellules dans un ordre décroissant de la valeur d'activité pour qu'elle soit une pluralité de cellules voisines d'activité candidates, dans lequel un rapport entre une première somme et une seconde somme est supérieur ou égal à la valeur seuil, la première somme étant une somme des valeurs d'activité correspondant à la pluralité de cellules voisines d'activité candidates, la seconde somme étant une somme des valeurs d'activité correspondant à toutes les petites cellules dans la liste de voisins d'activité.

**2.** Procédé de téléavertissement selon la revendication 1, **caractérisé en ce que** le procédé de téléavertissement comprend en outre :

(S32) la détection d'une partie de la pluralité de petites cellules qui sont voisines spatialement de la première petite cellule (C1) à enregistrer dans la liste de voisins physiques ; et
(S34) la détection d'une partie de la pluralité de petites cellules qui ont des trajectoires d'activité d'UE connectées à la première petite cellule (C1) à enregistrer dans la liste de voisins d'activité.

**3.** Procédé de téléavertissement selon la revendication 1 ou 2, **caractérisé en ce que** la valeur seuil augmente lorsque le comptage de téléavertissement augmente, et la liste de cellules de téléavertissement comprend :

la première petite cellule (C1) ;
la liste de voisins physiques ; et

la pluralité de cellules voisines d'activité candidates ;

dans lequel la liste de voisins d'activité comprend en outre la valeur d'activité correspondant à chaque petite cellule dans différents intervalles de temps.

4. Procédé de téléavertissement selon l'une quelconque des revendications 1 à 3, **caractérisé en ce que** le procédé de téléavertissement comprend en outre :

(S32) la détection d'une partie de la pluralité de petites cellules qui sont voisines spatialement de la première petite cellule (C1) à enregistrer dans la liste de voisins physiques ; et

(S34) la détection d'une partie de la pluralité de petites cellules qui ont des trajectoires d'activité d'UE connectées à la première petite cellule (C1) à enregistrer dans la liste de voisins d'activité.

5. Procédé de téléavertissement selon l'une quelconque des revendications 1 à 4, **caractérisé en ce que** le procédé de téléavertissement comprend en outre :

lorsqu'un emplacement enregistré d'un UE d'activité change de la première petite cellule (C1) à une seconde petite cellule (C2), l'augmentation de la valeur d'activité de la seconde petite cellule (C2) d'une valeur de poids dans la liste de voisins d'activité, où la valeur de poids est déterminée selon une session lancée par l'UE d'activité ; et

l'atténuation de la valeur d'activité de chaque petite cellule dans la liste de voisins d'activité.

6. Procédé de téléavertissement selon la revendication 2 ou 4 ou la revendication 5 lorsqu'elle dépend de la revendication 4, **caractérisé en ce que** lorsque la première petite cellule (C1) est activée, l'étape de détection d'une partie de la pluralité de petites cellules qui sont voisines spatialement de la première petite cellule est exécutée, et la liste de voisins physiques est mise à jour.

7. Dispositif de téléavertissement (10) pour téléavertir un UE par l'intermédiaire d'une pluralité de petites cellules, dans lequel le dispositif de téléavertissement (10) comprend :

un émetteur-récepteur (100), configuré pour identifier une première petite cellule (C1) où l'UE est actuellement enregistré et téléavertir l'UE selon une liste de cellules de téléavertissement ;

une unité de mémoire (102), configurée pour stocker une pluralité de listes de relations de voisins ; et

une unité de traitement (104), configurée pour obtenir une liste de voisins physiques et une liste de voisins d'activité correspondant à la première petite cellule (C1) à partir de la pluralité de listes de relations de voisins, et déterminer la liste de cellules de téléavertissement selon la liste de voisins physiques et la liste de voisins d'activité ;

dans lequel la liste de voisins physiques comprend une partie de la pluralité de petites cellules qui sont voisines spatialement de la première petite cellule, et la liste de voisins d'activité comprend une partie de la pluralité de petites cellules qui ont des trajectoires d'activité d'UE connectées à la première petite cellule ;

dans lequel l'unité de traitement (104) est configurée pour établir une valeur seuil selon un comptage de téléavertissement pour l'UE, et pour déterminer la liste de cellules de téléavertissement selon la valeur seuil ; et

dans lequel la liste de voisins d'activité comprend en outre une valeur d'activité correspondant à chaque petite cellule, dans lequel la valeur d'activité représente une fréquence d'activité d'UE respective de la première petite cellule à chaque petite cellule, et

dans lequel pour la détermination de la liste de cellules de téléavertissement, l'unité de traitement (104) est configurée pour sélectionner une partie de la pluralité de petites cellules dans un ordre décroissant de la valeur d'activité pour qu'elle soit une pluralité de cellules voisines d'activité candidates, dans lequel un rapport entre une première somme et une seconde somme est supérieur ou égal à la valeur seuil, la première somme étant une somme des valeurs d'activité correspondant à la pluralité de cellules voisines d'activité candidates, la seconde somme étant une somme des valeurs d'activité correspondant à toutes les petites cellules dans la liste de voisins d'activité.

8. Dispositif de téléavertissement (10) selon la revendication 7, **caractérisé en ce que** la valeur seuil augmente lorsque le comptage de téléavertissement augmente, et la liste de cellules de téléavertissement comprend :

la première petite cellule ;

la liste de voisins physiques ; et

la pluralité de cellules voisines d'activité candidates.

**9.** Dispositif de téléavertissement (10) selon la revendication 7 ou 8, **caractérisé en ce que** lorsque l'émetteur-récepteur (100) reçoit un premier message indiquant qu'un emplacement enregistré d'un UE d'activité change de la première petite cellule (C1) à une seconde petite cellule (C2), l'unité de traitement (104) est configurée pour augmenter la valeur d'activité de la seconde petite cellule (C2) d'une valeur de poids dans la liste de voisins d'activité, où la valeur de poids est déterminée selon une session lancée par l'UE d'activité,
dans lequel la liste de voisins d'activité comprend en outre la valeur d'activité correspondant à chaque petite cellule dans différents intervalles de temps, et l'unité de traitement (104) est configurée pour atténuer périodiquement la valeur d'activité de chaque petite cellule dans la liste de voisins d'activité.

**10.** Dispositif de téléavertissement (10) selon l'une quelconque des revendications 7 à 9, **caractérisé en ce que** lorsque l'émetteur-récepteur (100) reçoit un second message indiquant la mise à jour d'une partie de la pluralité de petites cellules qui sont voisines spatialement de la première petite cellule (C1), l'unité de traitement (104) est configurée pour mettre à jour la liste de voisins physiques.

FIG. 1

Identify a first small cell where
the UE is currently registered ─S12

Obtain a physical neighbor list
according to the first small cell ─S14

Obtain an activity neighbor list
according to the first small cell ─S16

Page the UE according to the physical
neighbor list and the activity neighbor list ─S18

FIG. 2

Set a threshold value according
to the paging count for the UE  ⌐S182

Determine a paging cell list
according to the threshold value  ⌐S184

Page the UE according to the paging cell list  ⌐S186

# FIG. 3

Detect cells which are spatially neighboring the first
small cell to record in the physical neighbor list  ⌐S32

Detect cells which have activity trajectories connected
to the first small cell to record in the activity neighbor list  ⌐S34

# FIG. 4

| Memory Unit 102 | Processing Unit 104 |
| Transceiver 100 | |

⌐10

# FIG. 5

**EP 3 065 477 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014155109 A1
- US 2013316706 A1